# EUROPÄISCHE PATENTANMELDUNG

(11) **EP 4 144 476 A1**
(43) Veröffentlichungstag der Anmeldung: **08.03.2023**
(21) Anmeldenummer: 21195176.9
(22) Anmeldetag: 07.09.2021
(51) Int. Cl.: B23K 35/02, B23K 35/26, B23K 35/36, B23K 35/362, C22C 13/00

(54) **LOTPASTE**

(71) Anmelder: Heraeus Deutschland GmbH & Co. KG, 63450 Hanau (DE)
(72) Erfinder: Dr. KÄSS, Steffen, 63450 Hanau (DE); Dr. STRÜBEN, Jan, 63450 Hanau (DE); STAAB, Janine, 63450 Hanau (DE)
(74) Vertreter: Heraeus IP

(57) **Zusammenfassung**

Lotpaste bestehend aus 82 bis 92 Gew.-% eines zinnbasierten Lots und 8 bis 18 Gew.-% eines Flussmittels, wobei das Flussmittel, bezogen auf sein Gesamtgewicht in der Lotpaste, 0,5 bis 5 Gew.-% mindestens einen Benzolderivats der Formel C₆H_{6-(x+y)}(OH)ₓ[O(CO)R]_{y} mit x = 0, 1 oder 2; y = 0, 1 oder 2; (x+y) = 2; und R = Phenyl oder C₁-C₁₂-Alkyl umfasst.

## Beschreibung

Die vorliegende Erfindung betrifft eine Lotpaste insbesondere für das Befestigen von elektronischen Bauteilen auf Substraten.

Lotpasten, insbesondere Weichlotpasten, finden vor allem in der Fertigung von elektronischen Schaltungen Anwendung und dienen der Herstellung einer mechanischen, elektrischen und thermischen Verbindung zwischen einem elektronischen Bauteil und einem Substrat, genauer gesagt zwischen dafür vorgesehenen Kontaktflächen derselben.

Beispiele für elektronische Bauteile im Sinne der vorliegenden Patentanmeldung umfassen Dioden, LEDs (light emitting diodes, lichtemittierende Dioden), Dies, IGBTs (insulated-gate bipolar transistors, Bipolartransistoren mit isolierter Gate-Elektrode), MOSFETs (Metall-Oxid-Halbleiter-Feldeffekttransistoren), ICs (integrated circuits, integrierte Schaltungen), Sensoren, Kühlkörper, Widerstände, Kondensatoren, Spulen, Verbindungselemente (z. B. Clips), Bodenplatten, Antennen, und dergleichen.

Beispiele für Substrate im Sinne der vorliegenden Patentanmeldung umfassen Leadframes, PCBs (printed circuit boards, gedruckte Leiterplatten), flexible Elektronik, Keramiksubstrate, Metallkeramiksubstrate wie beispielsweise DCB-Substrate (direct copper bonded-Substrate), IMS (isoliertes Metallsubstrat) und dergleichen.

Üblicherweise wird das elektronische Bauteil über die Lotpaste mit dem Substrat in Kontakt bzw. auf dieses aufgebracht. Die Lotpaste wird erwärmt, um das Lot in der Paste durch einen Reflow-Prozess aufzuschmelzen, wodurch der Kontakt zwischen dem elektronischen Bauteil und dem Substrat gebildet wird. Oftmals erfolgt das Reflowlöten in einem Vakuumlötofen. Nach dem Abkühlen und Erstarren des Lots sind elektronisches Bauteil und Substrat fest miteinander verbunden.

Neben dem den Hauptbestandteil bildenden Lotpulver enthalten Lotpasten in der Regel Flussmittel, die unter anderem dazu dienen, die Oxidschicht auf den Oberflächen des Lotpulvers, des Bauteils und des Substrates aufzulösen und so für eine bessere Benetzbarkeit beim Lötprozess zu sorgen.

Insbesondere beim Reflowlöten im Vakuumlötofen besteht die Gefahr der Bildung sogenannter Flussmittelspritzer und einer damit oftmals einhergehenden Bildung von Lotspritzern. Mit anderen Worten, es kann zu einem Verspritzen von Lotmetall infolge von Siedeverzügen innerhalb des Flussmittelanteils der heißen geschmolzenen Lotpaste kommen; dabei kann sich mitgerissenes Lotmetall in Form der Lotspritzer an unerwünschter Stelle insbesondere auf dem Substrat absetzen und Probleme bereiten, beispielsweise Kurzschlüsse oder Verhinderung einer erfolgreichen Kontaktierung an einer betroffenen Stelle; beispielsweise kann eine an solcher Stelle gewünschte Drahtbondung fehlschlagen oder qualitätsgemindert ausfallen.

Das Ausmaß der Bildung vorerwähnter Lotspritzer kann bestimmt und bewertet werden mittels eines nach Beendigung eines Reflowlötvorgangs erfolgendes Auszählen von ≥300 µm großen Lotspritzern unter dem Mikroskop. Das bedeutet, im Falle runder Lotspritzer werden solche mit einem Durchmesser ≥300 µm betrachtet, im Falle nicht runder Lotspritzer werden solche mit einer größten Längenausdehnung ≥300 µm betrachtet. Die so bestimmte Anzahl von Lotspritzern kann in Beziehung gesetzt werden zur Anzahl von verlöteten Bauteilen, beispielsweise als prozentuales Verhältnis.

EP 3 603 879 B1 löst die beschriebene Problematik durch Bereitstellung einer Flussmittelzusammensetzung, die 2,2'-Methylenbis[6-(1-methylcyclohexyl)-p-cresol] als ein sogenanntes Antizerstreuungsmittel umfasst, wobei dessen Gewichtsprozentanteil 0,5 bis 10 Gew.-% beträgt. EP 3 603 879 B1 offenbart auch die Verwendung der Flussmittelzusammensetzung als Flussmittelzusammensetzung von Lotpasten.

Die Anmelderin hat eine andere erfinderische Lösung als die der EP 3 603 879 B1 für die beschriebene Problematik gefunden. Diese Lösung besteht in der Verwendung mindestens eines Benzolderivats der Formel C₆H_{6-(x+y)}(OH)ₓ[O(CO)R]_{y} mit x = 0, 1 oder 2; y = 0, 1 oder 2; (x+y) = 2; und R = Phenyl oder C₁-C₁₂-Alkyl als Lotspritzer vermeidendes Additiv im Flussmittel von Lotpasten. Bevorzugt ist R = Phenyl oder C₁-C₆-Alkyl und insbesondere bevorzugt ist R = Phenyl oder Methyl.

In der weiteren Folge wird das mindestens eine Benzolderivat der vorerwähnten Formel C₆H_{6-(x+y)}(OH)_{x[}O(CO)R]_{y} abkürzend auch als "das mindestens eine Benzolderivat" oder "mindestens ein Benzolderivat" bezeichnet.

Bevorzugte Beispiele für das mindestens eine Benzolderivat umfassen 1,2-Dihydroxybenzol, 1,3-Dihydroxybenzol, 1,4-Dihyxdroxybenzol, 2-Hydroxyphenylacetat, 3-Hydroxyphenylacetat, 4-Hydroxyphenylacetat, 3-Hydroxyphenylbenzoat, 1,2-Diacetoxybenzol, 1,3-Diacetoxybenzol und 1,4-Diacetoxybenzol. Besonders bevorzugt sind 3-Hydroxyphenylacetat und 3-Hydroxyphenylbenzoat.

Die Erfindung besteht somit in der Bereitstellung einer Lotpaste bestehend aus 82 bis 92 Gew.-% (Gewichts-%) eines zinnbasierten Lots und 8 bis 18 Gew.-% eines Flussmittels. Das Flussmittel umfasst dabei, bezogen auf sein Gesamtgewicht respektive auf seinen Gewichtsanteil in der erfindungsgemäßen Lotpaste, 0,5 bis 5 Gew.-% des mindestens einen Benzolderivats. Der Gewichtsanteil des mindestens einen Benzolderivats in der erfindungsgemäßen Lotpaste kann dabei im Bereich von 0,04 bis 0,9 Gew.-% liegen.

Die erfindungsgemäße Lotpaste umfasst 82 bis 92 Gew.-% eines zinnbasierten Lots.

Der Ausdruck "zinnbasiertes Lot" bedeutet eine Lotlegierung umfassend mindestens 80 Gew.-%, vorzugsweise mindestens 83 Gew.-%, insbesondere 85 bis 90 Gew.-% Zinn. In einer bevorzugten Ausführungsform der erfindungsgemäßen Lotpaste umfasst oder besteht das zinnbasierte Lot neben dem Hauptbestandteil Zinn aus 0,1 bis 8 Gew.-%, vorzugsweise 0,2 bis 6 Gew.-% Silber und/oder 0,1 bis 1,5 Gew.-%, vorzugsweise 0,2 bis 1 Gew.-% Kupfer. In einer weiteren bevorzugten Ausführungsform der erfindungsgemäßen Lotpaste umfasst oder besteht das zinnbasierte Lot neben dem Hauptbestandteil Zinn aus 5 oder 8 oder 10 Gew.-% Antimon. Bevorzugt ist das zinnbasierte Lot bleifrei; d.h. es kann dabei auch Blei umfassen, welches aufgrund technischer Gegebenheiten unbeabsichtigt in das zinnbasierte Lot gelangt sein kann, z.B. als Folge einer unbeabsichtigten, aber unvermeidlichen Einarbeitung bei der Herstellung. Mit anderen Worten, Blei kann in dem zinnbasierten bevorzugten bleifreien Lot als unvermeidbare Verunreinigung vorhanden sein, allerdings nur in sehr geringen Mengen von insgesamt beispielsweise > 0 bis 1000 Gew.-ppm. In jedem Fall wird Blei dem zinnbasierten bevorzugten bleifreien Lot nicht absichtlich zugesetzt oder zugeführt.

Es ist bevorzugt, dass das zinnbasierte Lot eine Liquidustemperatur in einem Bereich von 200 bis 280 °C, vorzugsweise in einem Bereich von 200 bis 230 °C, aufweist.

In einer bevorzugten Ausführungsform liegt das zinnbasierte Lot in der erfindungsgemäßen Lotpaste als Lotpulver vor, vorzugsweise mit einer gewichtsmittleren Teilchengröße von 15 bis 50 µm, vorzugsweise von 20 bis 45 µm, bestimmt gemäß IPC-TM-650 2.2.14.2.

Sofern nicht anders vermerkt, handelt es sich bei allen in dieser Patentanmeldung zitierten Normen jeweils um die aktuelle Fassung zum Zeitpunkt des Prioritätsdatums.

Die erfindungsgemäße Lotpaste umfasst 8 bis 18 Gew.-% eines Flussmittels, welches, bezogen auf sein Gesamtgewicht, 0,5 bis 5 Gew.-% des mindestens einen Benzolderivats enthält.

Vorteilhafterweise, jedoch unerwartet entfaltet das mindestens eine Benzolderivat als Flussmitteladditiv in der erfindungsgemäßen Lotpaste eine das Auftreten vorerwähnter Lotspritzer reduzierende oder gar verhindernde Wirkung.

Neben dem erfindungswesentlichen Gewichtsanteil von 0,5 bis 5 Gew.-% des mindestens einen Benzolderivats im Flussmittel unterliegt das Flussmittel hinsichtlich seiner weiteren Zusammensetzung keinen besonderen Beschränkungen. Es kann daher ein übliches, dem Fachmann bekanntes Flussmittel verwendet werden, welches, bezogen auf sein Gewicht respektive auf seinen Gewichtsanteil in der erfindungsgemäßen Lotpaste, 0,5 bis 5 Gew.-% des mindestens einen Benzolderivats umfasst. Ein solches Flussmittel kann erhalten werden, indem man ein übliches, dem Fachmann bekanntes Flussmittel mit einer entsprechenden Menge des mindestens einen Benzolderivats ausstattet, beispielsweise durch Hinzugeben und Vermischen mit dem mindestens einen Benzolderivat oder im Wege einer Grundaufformulierung unter Verwendung einer entsprechenden Menge des mindestens einen Benzolderivats. Das in der erfindungsgemäßen Lotpaste enthaltene Flussmittel kann demnach neben dem mindestens einen Benzolderivat flussmittelübliche Bestandteile umfassen. Die flussmittelüblichen Bestandteile können dabei mindestens einen beispielsweise aus der Gruppe bestehend aus Basisharzen (beispielsweise Kolophonium, Acrylharz), Aktivatoren (beispielsweise Amine, organische Carbonsäuren), Verdickungs- respektive Thixotropiermittel (beispielsweise hydriertes Rizinusöl, Bienenwachs, Carnaubawachs, Polyamidwachs) und organischen Lösungsmitteln ausgewählten Bestandteil umfassen.

In einer bevorzugten Ausführungsform der erfindungsgemäßen Lotpaste kann das Flussmittel neben dem mindestens einen Benzolderivat beispielsweise, jeweils bezogen auf gesamtes Flussmittelgewicht, i) 30 bis 60 Gew.-% mindestens eines sauren Harzes, ii) 0,5 bis 20 Gew.-% mindestens einer niedermolekularen Carbonsäure und iii) 0,4 bis 15 Gew.-% mindestens eines Amins umfassen.

Das mindestens eine saure Harz i) kann aus Kunstharzen mit sauren Gruppen wie insbesondere Carboxylgruppen und/oder aus Naturharzen, die unmodifiziert oder chemisch modifiziert sein können, ausgewählt sein. Bei den chemisch modifizierten Naturharzen kann es sich beispielsweise um durch Hydrierung, Dimerisierung und/oder teilweiser Veresterung ihrer Carboxylgruppen modifizierte Naturharze handeln. Insbesondere handelt es sich bei den Naturharzen selber um solche vom Kolophoniumharztyp.

Das mindestens eine saure Harz i) kann eine Gesamtsäurezahl beispielsweise im Bereich von 50 bis 300 mg KOH/g aufweisen. Der hierin verwendete Ausdruck "Säurezahl" bezieht sich auf eine gemäß DIN EN ISO 2114 in mg KOH/g (Milligramm KOH pro Gramm) bestimmbare Säurezahl (SZ).

Die mindestens eine niedermolekulare Carbonsäure ii) kann bevorzugt aus Dicarbonsäuren ausgewählt sein. Beispiele umfassen Oxalsäure, Adipinsäure, Malonsäure, Bernsteinsäure, Glutarsäure, Pimelinsäure, Korksäure, Azelainsäure, Sebacinsäure, Undecandisäure, Dodecandisäure und Tridecandisäure.

Beispiele für das mindestens eine Amin iii) umfassen N,N,N',N'-Tetramethylethylendiamin, N,N,N',N'-Tetraethylethylendiamin, N,N,N',N'-Tetrapropylethylendiamin, N-Coco-1,3-Diaminopropan, 1,6-Diaminohexan, 1,7-Diaminoheptan, 1,8-Diaminooktan, 1,9-Diaminononan und 1,10-Diaminodecan, Bis(2-ethylhexyl)amin, Bis(2-methylhexyl)amin, , Diethylamin, Triethylamin, Cyclohexylamin, Diethanolamin, Triethanolamin, hydriertes Talg-alkylamin, hydriertes (Talg-alkyl)dimethylamin und hydriertes Bis(talg-alkyl)methylamin.

Neben dem mindestens einen Benzolderivat und den Bestandteilen i), ii) und iii) kann das Flussmittel gemäß der bevorzugten Ausführungsform gegebenenfalls ein oder mehrere Verdickungs- respektive Thixotropiermittel umfassen, beispielsweise in einem Mengenanteil von insgesamt 1 bis 5 Gew.-%. Beispiele umfassen Ethylcellulose, hydriertes Rizinusöl und modifiziertes oder unmodifiziertes Glycerin-tris-12-hydroxystearin und Polyamidwachse.

Weiterhin kann das Flussmittel gemäß der bevorzugten Ausführungsform gegebenenfalls ein oder mehrere organische Lösemittel umfassen, beispielsweise in einem Mengenanteil von insgesamt 20 bis 46 Gew.-%. Beispiele umfassen bei 25 °C flüssige Diole, Alkohole, Etheralkohole und Ketone, insbesondere Trimethylpropanol, 1,2-Oktandiol, 1,8-Oktandiol, 2,5-Dimethyl-2,5-hexandiol, Isobornylcyclohexanol, Glykolether, 2-Ethyl-1,3-hexandiol, n-Decylalkohol, 2-Methyl-2,4-pentandiol, Terpineol und Isopropanol sowie Mischungen davon. Beispiele für Glykolether umfassen Mono-, Di-, Tripropylenglykolmethylether, Mono-, Di-, Tripropylenglykol-n-butylether, Mono-, Di-, Triethylenglykol-n-butylether, Ethylenglykoldimethylether, Triethylenglykolmethylether, Diethylenglykoldibutylether, Tetraethylenglykoldimethylether und Diethylenglykolmonohexylether sowie Mischungen davon.

Weiterhin kann das Flussmittel gemäß der bevorzugten Ausführungsform gegebenenfalls ein oder mehrere halogenhaltige Verbindungen umfassen, beispielsweise in einem Mengenanteil von insgesamt 0,1 bis 3 Gew.-%. Beispiele umfassen Anilinhydrochlorid, Glutaminsäurehydrochlorid, Diethanolaminhydrochlorid, Diethanolaminhydrobromid, Triethanolaminhydrochlorid, Triethanolaminhydrobromid und trans-2,3-Dibrom-2-buten-1,4-diol.

Weiterhin kann das Flussmittel gemäß der bevorzugten Ausführungsform gegebenenfalls ein oder mehrere Entschäumer umfassen, beispielsweise in einem Mengenanteil von 0,5 bis 1 Gew.-%.

Die erfindungsgemäße Lotpaste kann hergestellt werden durch Mischen des Flussmittels mit dem Lotpulver aus dem zinnbasierten Lot respektive durch Mischen der Bestandteile des Flussmittels und Zugabe eines Lotpulvers aus dem zinnbasierten Lot. Die Zugabe des Lotpulvers erfolgt vorzugsweise in mehreren Portionen unter Rühren zum vorgelegten Flussmittel respektive zu einer vorgelegten Mischung der Flussmittelbestandteile, im Allgemeinen ohne Erwärmen.

Vorzugsweise weist die erfindungsgemäße Lotpaste eine Viskosität von 50 bis 200 Pa·s auf, bestimmt bei 23 °C und einer Scherrate von 10 s⁻¹, gemessen mit Platte-Kegel Rheometer (beispielsweise das Platte-Kegel Rheometer Physica der Firma Anton-Paar).

Die erfindungsgemäße Lotpaste kann verwendet werden zum Verbinden von elektronischen Bauteilen mit Substraten. Sie kann auch verwendet werden zur Herstellung von Lotdepots auf Substraten.

Beim Verbinden von elektronischen Bauteilen mit Substraten erfolgt die Kontaktierung der Kontaktfläche des Substrates und der Kontaktfläche des elektronischen Bauteils über die erfindungsgemäße Lotpaste.

Ein Verfahren zur Befestigung eines elektronischen Bauteils auf einem Substrat unter Verwendung der erfindungsgemäßen Lotpaste kann die folgenden Schritte umfassen:
a) Bereitstellen eines elektronischen Bauteils mit einer Kontaktfläche,
b) Bereitstellen eines Substrates mit einer Kontaktfläche,
c) Versehen der Kontaktfläche des elektronischen Bauteils und/oder der Kontaktfläche des Substrates mit der erfindungsgemäßen Lotpaste,
d) Kontaktieren der Kontaktfläche des elektronischen Bauteils mit der Kontaktfläche des Substrates über die erfindungsgemäße Lotpaste; und
e) Erwärmen der erfindungsgemäßen Lotpaste über die Liquidustemperatur des zinnbasierten Lots und anschließendes Abkühlen und Erstarren lassen des zinnbasierten Lots unter Ausbilden einer festen Verbindung zwischen dem elektronischen Bauteil und dem Substrat.

Die Schritte a) und b) sind selbsterklärend und bedürfen keiner näheren Erläuterung.

In Schritt c) kann die erfindungsgemäße Lotpaste mittels üblicher dem Fachmann bekannter Verfahren auf eine der oder auf beide Kontaktflächen appliziert werden, beispielsweise mittels Sieb- oder Schablonendruck.

In Schritt d) können die Kontaktflächen des elektronischen Bauteils und des Substrates über die erfindungsgemäße Lotpaste miteinander kontaktiert werden. Anders ausgedrückt, es kann eine Sandwichanordnung geschaffen werden aus dem elektronischen Bauteil und dem Substrat mit der erfindungsgemäßen Lotpaste zwischen deren Kontaktflächen.

In Schritt e) kann die Sandwichanordnung verlötet werden, indem die erfindungsgemäße Lotpaste über die Liquidustemperatur des zinnbasierten Lots erwärmt wird, so dass es zur Bildung einer festen Verbindung zwischen dem elektronischen Bauteil und dem Substrat über die erfindungsgemäße Lotpaste nach anschließendem Abkühlen und Erstarren des zinnbasierten Lots kommt. Dabei wird die erfindungsgemäße Lotpaste vorzugsweise so erwärmt, dass das zinnbasierte Lot in seine Liquidusphase übergeht, jedoch ohne dass es zu einer Schädigung des elektronischen Bauteils und/oder des Substrates kommt. Die Sandwichanordnung respektive die erfindungsgemäße Lotpaste wird vorzugsweise auf eine Temperatur erwärmt, die 5 bis 60 °C, vorzugsweise 10 bis 50 °C, über der Liquidustemperatur des zinnbasierten Lots liegt. Schritt e) kann als Reflowlöten in einem üblichen Lötofen mit oder ohne Vakuumunterstützung stattfinden.

Es hat sich gezeigt, dass beim Arbeiten mit einer erfindungsgemäßen Lotpaste weniger oder keine unerwünschten Lotspritzer gebildet werden als beim Arbeiten mit einer gleichartig zusammengesetzten Lotpaste ohne das mindestens eine Benzolderivat im Flussmittel.

### Beispiele

Es wurden die Flussmittelzusammensetzungen FL1 bis FL5 sowie FLV1 gemäß den Angaben in Tabelle 1 hergestellt. Jeweils 11 Gew.-Teile dieser Flussmittel wurden mit jeweils 89 Gew.-Teilen Lotpulver (SnAgCu: Sn 96,5 Gew.-%, Ag 3,0 Gew.-%, Cu 0,5 Gew.-%, Typ 3 gemäß der Norm IPC J-STD-006) zu erfindungsgemäßen Lotpasten 1 bis 5 (formuliert mit den Flussmitteln FL1 bis FL5) bzw. zu einer Vergleichslotpaste V1 (formuliert mit dem Vergleichsflussmittel FLV1) vermischt.

Zur Bewertung der Lotpasten hinsichtlich ihrer Neigung zur Bildung von Lotspritzern wurden selbige mittels Schablonendruck auf je 3 DCB-Substraten (d.h. mit Kupfer metallisierte Al₂O₃-Keramiksubstrate der Abmaße 17,8 cm × 12,7 cm) in Form von 48 Lotpads (Abmaße 5 × 14 mm; Abstand zwischen den Lotpads mindestens 1 mm) aufgedruckt. Die Nassschichtdicke der einzelnen Lotpads betrug 200 µm. Unmittelbar nach dem Lotpastenauftrag wurden die Lotpads mit Halbleiterchips bestückt (Abmaße Chip: 6,25 × 17,5 mm) und in einem Reflowofen gelötet [Aufheizen von Raumtemperatur auf 150°C mit einer Heizrate von 3K/min (Haltezeit 80 s), weiteres Aufheizen auf eine Höchsttemperatur von 250°C mit einer Heizrate von 3K/min (Haltezeit 60 s, wobei nach 30 s für 7 s Vakuum gezogen wurde), anschließendes Abkühlen mit 2 K/min auf Raumtemperatur].

Die Bewertung der Lotspritzer erfolgte mit Hilfe eines optischen Mikroskops. Hierzu wurden alle auftretenden Lotspritzer mit einer Längenabmessung von ≥300 µm gezählt und ins prozentuale Verhältnis zu der Anzahl gelöteter Halbleiterchips gesetzt.

Tabelle 1 zeigt die Flussmittelzusammensetzung der erfindungsgemäßen Lotpasten 1 bis 5 und der Vergleichslotpaste V1. Die Angaben beziehen sich jeweils auf Gew.-%. In der letzten Zeile von Tabelle 1 findet man das prozentuale Verhältnis der Lotspritzer mit einer Längenabmessung von ≥300 µm zur Anzahl gelöteter Halbleiterchips.

**Tabelle 1**

| **Flussmittel** | **FL1** | **FL2** | **FL3** | **FL4** | **FL5** | **FLV1** |
|---|---|---|---|---|---|---|
| Modifiziertes Kolophoniumharz mit gewichtsmittlerer Molmasse M_{w} = 375 und SZ = 240 mg KOH/g | 40 | 40 | 40 | 40 | 40 | 40 |
| Diethylenglykolmonobutylether | 42 | 46,5 | 46 | 42 | 42 | 47 |
| N-Coco-1,3-Diaminopropan | 9 | 9 | 9 | 9 | 9 | 9 |
| Sebacinsäure | 2 | 2 | 2 | 2 | 2 | 2 |
| Polycaprolactamwachs (Schmelzpunkt 123°C) | 2 | 2 | 2 | 2 | 2 | 2 |
| 3-Hydroxyphenylacetat | 5 | 0,5 | 1 | 0 | 0 | 0 |
| 1,3-Dihydroxybenzol | 0 | 0 | 0 | 5 | 0 | 0 |
| 3-Hydroxyphenylbenzoat | 0 | 0 | 0 | 0 | 5 | 0 |
| Verhältnis Lotspritzer ≥ 300 µm : Anzahl gelöteter Halbleiterchips (%) | 0 | 1,5 | 1 | 0,5 | 1 | 13 |

## Patentansprüche

1. Lotpaste bestehend aus 82 bis 92 Gew.-% eines zinnbasierten Lots und 8 bis 18 Gew.-% eines Flussmittels, wobei das Flussmittel, bezogen auf sein Gesamtgewicht in der Lotpaste, 0,5 bis 5 Gew.-% mindestens einen Benzolderivats der Formel C₆H_{6-(x+y)}(OH)ₓ[O(CO)R]_{y} mit x = 0, 1 oder 2; y = 0, 1 oder 2; (x+y) = 2; und R = Phenyl oder C₁-C₁₂-Alkyl umfasst.

2. Lotpaste nach Anspruch 1, wobei der Gewichtsanteil des mindestens einen Benzolderivats in der Lotpaste im Bereich von 0,04 bis 0,9 Gew.-% liegt.

3. Lotpaste nach Anspruch 1 oder 2, wobei R = Phenyl oder C₁-C₆-Alkyl ist.

4. Lotpaste nach Anspruch 1 oder 2, wobei R = Phenyl oder Methyl ist.

5. Lotpaste nach Anspruch 1 oder 2, wobei das mindestens eine Benzolderivat ausgewählt ist aus der Gruppe bestehend aus 1,2-Dihydroxybenzol, 1,3-Dihydroxybenzol, 1,4-Dihyxdroxybenzol, 2-Hydroxyphenylacetat, 3-Hydroxyphenylacetat, 4-Hydroxyphenylacetat, 3-Hydroxyphenylbenzoat, 1,2-Diacetoxybenzol, 1,3-Diacetoxybenzol und 1,4-Diacetoxybenzol.

6. Lotpaste nach einem der vorhergehenden Ansprüche, wobei das zinnbasierte Lot eine Lotlegierung ist, welche mindestens 80 Gew.-% Zinn umfasst.

7. Lotpaste nach Anspruch 6, wobei das zinnbasierte Lot 0,1 bis 8 Gew.-% Silber und/oder 0,1 bis 1,5 Gew.-% Kupfer umfasst.

8. Lotpaste nach einem der vorhergehenden Ansprüche, wobei das zinnbasierte Lot eine Liquidustemperatur in einem Bereich von 200 bis 280 °C aufweist.

9. Lotpaste nach einem der vorhergehenden Ansprüche, wobei das Flussmittel neben dem mindestens einen Benzolderivat flussmittelübliche Bestandteile umfasst.

10. Lotpaste nach Anspruch 9, wobei die flussmittelüblichen Bestandteile mindestens einen Bestandteil umfassen ausgewählt aus der Gruppe bestehend aus Basisharzen, Aktivatoren, Verdickungsmitteln, Thixotropiermitteln und organischen Lösungsmitteln.

11. Lotpaste nach einem der Ansprüche 1 bis 8, wobei das Flussmittel neben dem mindestens einen Benzolderivat, jeweils bezogen auf gesamtes Flussmittelgewicht, i) 30 bis 60 Gew.-% mindestens eines sauren Harzes, ii) 0,5 bis 20 Gew.-% mindestens einer niedermolekularen Carbonsäure und iii) 0,4 bis 15 Gew.-% mindestens eines Amins umfasst.

12. Verwendung einer Lotpaste nach einem der Ansprüche 1 bis 11 zum Verbinden von elektronischen Bauteilen mit Substraten oder zur Herstellung von Lotdepots auf Substraten.

13. Verfahren zur Befestigung eines elektronischen Bauteils auf einem Substrat unter Verwendung einer Lotpaste nach einem der Ansprüche 1 bis 11 umfassend die Schritte:
a) Bereitstellen eines elektronischen Bauteils mit einer Kontaktfläche,
b) Bereitstellen eines Substrates mit einer Kontaktfläche,
c) Versehen der Kontaktfläche des elektronischen Bauteils und/oder der Kontaktfläche des Substrates mit der Lotpaste,
d) Kontaktieren der Kontaktfläche des elektronischen Bauteils mit der Kontaktfläche des Substrates über die Lotpaste; und
e) Erwärmen der Lotpaste über die Liquidustemperatur des zinnbasierten Lots und anschließendes Abkühlen und Erstarren lassen des zinnbasierten Lots unter Ausbilden einer festen Verbindung zwischen dem elektronischen Bauteil und dem Substrat.
